# EUROPEAN PATENT SPECIFICATION

(11) **EP 2 698 224 B1**
(45) Date of publication and mention of the grant of the patent: **08.03.2017**
(21) Application number: 12180617.8
(22) Date of filing: 16.08.2012
(51) Int. Cl.: B23K 26/32, B23K 26/28

(54) **Method for the manufacture of a joint between a metal structure and a plastic composite structure**
Verfahren für die Herstellung einer Verbindung zwischen einer Metallstruktur und einer Kunststoffverbundstoffstruktur
Procédé de fabrication d'un joint entre une structure métallique et une structure en plastique composite

(43) Date of publication of application: 19.02.2014
(73) Proprietor: Helmholtz-Zentrum Geesthacht Zentrum für Material- und Küstenforschung GmbH, 21502 Geesthacht (DE)
(72) Inventor: Kolossa, Spyridoula, 22391 Hamburg (DE); Schnubel, Dirk, 66123 Saarbrücken (DE); Riekehr, Stefan, 21502 Geesthacht (DE); Ventzke, Volker, 22529 Hamburg (DE); Dinse, Rene, 21483 Neu Gülzow (DE); Kashaev, Nikolai, 21522 Hittbergen (DE)
(74) Representative: Uexküll & Stolberg

(56) References cited:
- DE-A1- 10 111 567
- DE-A1-102008 031 121
- US-A1- 2010 018 027

## Description

### BACKGROUND OF THE INVENTION

The present invention relates to a method for the manufacture of a joint between a metal structure and a plastic composite structure and to an assembly comprising a metal structure and a plastic composite structure which are joined together by means of laser welding.

In automotive engineering and other industries, the need for lightweight construction and cost efficiency is leading to the development of hybrid components in which two or more different materials are combined. Fiber reinforced plastic (FRP) composites are superior to metals in terms of specific strength and stiffness, corrosion resistance, and formability. Composite materials, therefore, are used for primary structures of small or mid-sized nautical vessels and aerospace structures. However, metals are still important materials especially for large structures. Therefore, large vessels are usually made of hybrid structures composed of composites and metals. Since composite/metal hybrid structures are the key technology in realizing high stiffness, light weight, and high reliability, they are now seen in many structures: automotive drive shafts, headstocks of grinding machines, and robotic structures.

There are two major methods for joining different materials: mechanical fastening and adhesive bonding. Mechanical fastening using bolts or rivets is simple, and it is possible to obtain high joining strength with small scatter. This method is therefore widely used in metal structures. The disadvantages of mechanical joints are an increase in weight of the whole structure and low sealing performance. In addition, presence of the bolt holes of mechanical joints decreases the cross-sectional area of structures, and increases stress concentration. Especially in the case of the FRP structures, plastic-metal hybrid structures, the drilling process to fabricate bolt holes breaks reinforcing fibers, and causes peeling of the higher plies at the entry of the hole, fiber wrenching and resin degradation on the wall of the hole, and delamination of the last plies in the laminate. Since these damages can initiate fatigue cracks, mechanical fastening in FRP structures severely decreases fatigue strength. For these reasons, a higher number of bolted joints has to be used to join a FRP structure and a metal sheet in applications requiring durable joints, such as in the aircraft industry. A bolted and co-cured hybrid joint between glass fiber reinforced plastic (GFRP) and aluminium is disclosed in Matsuzaki et al., Composites: Part A 39 (2008), pages 154-163.

Using adhesive bonding, the weight of a structure is less than if mechanical joints are used. The adhesive joint has a sealing effect, no stress concentration due to bolt holes, and no damage in the FRP from the bonding process. These advantages allow the adhesive joints to have high fatigue strength. In the adhesive joints, however, each adherend has its own suitable adhesive. The selection of adhesive is difficult for joints of different materials. In addition, degreasing and etching are necessary in order to obtain high joining strength during the general bonding process of metal adherends. Although chemical treatment brings high bonding strength, the adhesive surface would be oxidized and polluted after a few hours. The degradation of the adhesive surface highly decreases the bonding strength. For these reasons, obtaining high joint strength with low scatter is difficult for adhesive joints.

Hence, there is a continued need for improved methods for joining metal and plastic composite structures.

For example, WO 2008/110835 discloses a hybrid joint incorporating small diameter pins which are fitted into a plastic prepeg. DE 10 2008 031 121 A1 discloses a weld rivet connection of one or more components comprising a base component, wherein the component or components have a hole through which the shaft of the weld rivet comprising a head extends, wherein one end surface of the shaft is welded to the surface of the base component and is plastically deformed.

It is an object of the present invention to provide a method for the manufacture of a lightweight joint between a metal structure and a plastic composite structure which exhibits improved fatigue properties, and which are easy to repair, when damage occurs to the metal parts. It is a further object of the invention to provide an assembly comprising lightweight joint between a metal structure and a plastic composite structure which exhibits improved fatigue properties.

### SUMMARY OF THE INVENTION

The above mentioned object is achieved by a method for the manufacture of a joint between a plastic composite structure and a metal structure, wherein (i) at least part of the plastic composite structure is overlapped with at least part of the metal structure, (ii) a cylindrical metal rivet, which has a cylindrical shaft section and a head section, the head section having a larger diameter than the cylindrical shaft section section, is protruded through a punch or drilled hole in said plastic composite structure and said metal structure connecting both in such a way that the head section of the metal rivet faces the free surface of said plastic composite structure and that at least part of the shaft section of the metal rivet contacts the metal structure, and thereafter, (iii) the part of said metal rivet contacting said metal structure is welded to said metal structure by means of laser welding on the interface of said metal rivet and said metal structure. Preferably, part of the head portion of the cylindrical metal rivet forms a ring section which provides a bearing surface to secure the plastic composite structure against the metal structure. Alternatively, the plastic composite structure may be sandwiched between two metal structures, whereby the metal rivet is welded to both metal structures. In this way, the plastic composite structure is secured against both metal structures.

Generally, the metal structure is of any metal or metal alloy that has good weldability to the metal or alloy that is used for the metal rivet. According to a preferred aspect of the invention, the metal structure is of titanium (Ti), aluminium (Al), magnesium (Mg) or an alloy of the afore-mentioned metals. An alloy of the afore-mentioned metals are preferably alloys, wherein any of these metals is present in an amount of not less than 50 wt.%, preferably not less than 75 wt.%.

Preferably the metal structure is in the form of a metal sheet. A typical thickness of the metal sheet for applications in the aerospace industry is from 1 mm to 5 mm, preferably from 2 mm to 3 mm. For other applications in the aerospace, automotive or nautical vessel industries the sheet thickness can vary between 1 mm to 1 cm, preferably from 2 mm to 5 mm, and most preferably from 2 mm to 3 mm, such as 2.5 mm.

To better adhere to the plastic composite sheet, the metal sheet may be structured on the surface facing the plastic composite sheet. The structures may be of any design which causes friction and/or which anchors the metal structure to the plastic composite structure once hardened. The configuration of the structured surface of the metal sheet may be inform of pyramids, hemispheres, or mushroom-like structures such as those described in EP 2 648 436 A1, which is incorporated herein by reference.
According to another preferred aspect of the invention, the plastic composite is a fiber reinforced plastic (FRP) composite, preferably of a carbon fiber reinforced plastic (CFRP) or of a glass fiber reinforced plastic (GFRP). According to a preferred aspect of the invention, the plastic composite structure is in the form of a plastic composite sheet. A typical thickness is from 1 mm to 1 cm, preferably from 2 mm to 5 mm, and most preferably from 2 mm to 3 mm, such as 2.5 mm. However, the non-welded sheet can be of any other material such as plastic, wood, glass, another metal, etc.

The metal rivet can be of any material which may be welded to the metal structure by means of laser welding. According to one aspect of the invention, the metal rivet is made of the material of the metal sheet or of a similar material. Thus, according to a preferred aspect of the invention, the metal rivet is of titanium (Ti), aluminium (Al), magnesium (Mg) or an alloy of the metals. An alloy of the afore-mentioned metals are preferably alloys, wherein any of these metals is present in an amount of not less than 50 wt.%, preferably not less than 75 wt.%.

According to one aspect of the invention the head section of the metal rivet has a conical form that tapers from one end of the rivet to a section, where the head section connects to the shaft section of the rivet. According to another aspect of the invention the head section of the metal rivet has an undercut, i.e. the head section has a cylindrical or hemispherical form which is larger in diameter than the shaft section.

The metal rivet may be a massive (solid) or a hollow metal rivet.

The diameter of the metal rivet at its broadest point can vary from few micrometers to a number of centimetres. Most preferably, the metal rivet has a diameter from 2 mm to 10 mm, in particular from 4 mm to 6 mm.

According to a further preferred embodiment of the invention, a thermal insulator layer is disposed between the metal structure and the plastic composite structure. The thermal insulator layer delays heat transfer from the metal rivet to the plastic composite in a way that burning, melting or deforming of the plastic composite is avoided when the rivet is welded to the metal sheet. Any material that can absorb the energy induced by the laser and which withstands the heat caused by the laser can be used as a thermal insulator. Preferred insulators are ceramics which have very good insulation properties. However, these materials have the disadvantage that they are very brittle. Other preferred thermal insulators are made of quartz, alumina or zirconia. Preferably, the thermal insulator layer is disposed only a few mm (such as 0.1 to 1.5 mm) around the holes through which the metal rivet is protruded, and not throughout the entire plastic composite, metal interface.

The sheet thickness of the thermal insulator depends on the joining area structure as well as the amount of heat that is called to absorb. For weight reasons it should be chosen as thin as possible. For example the sheet thickness of the thermal insulator may be between 0.1 mm and 2 mm, preferably between 1 and 1.5 mm.

It is preferred that the laser welded joint between metal structure and metal rivet covers the entire depth of the metal structure, i.e. metal rivet is welded to the metal structure throughout the entire thickness of the metal structure. In this way weak spots on the interface between metal rivet and metal structure are avoided, which may be the cause for crack initiation. Hence, if the laser cannot be adjusted in a manner sufficiently precise to avoid contact with the plastic composite structure, the use of the afore-mentioned thermal insulator layer on the interface between plastic composite sheet and metal sheet is recommended. On the other hand, a thermal insulator may not be necessary, if a laser is used for producing the laser welded joint, the depth of which can be adjusted in the region of few micrometers.

The welding parameters will have to be adjusted depending on the laser equipment and the welding depth that is desired to be achieved. These parameters may differ when using different laser equipment. A person skilled in the art would know how to adjust the welding parameters. In a typical process of the invention, a laser power of around 1800 W was applied. Furthermore, in order to lower the amount of heat transferred onto the plastic composite structure during the welding procedure, the structure is preferably cooled on the side of the plastic composite.

Other welding parameters, which may be controlled, are the welding depth. The welding depth is preferably as deep as the thickness of the metal plate or structure. The whole interface of the metal rivet and the metal structure is preferably welded, and the welded zone preferably does not have any pores or notches. The keyhole width is preferably chosen as narrow as possible, so that the welded zone and the corresponding heat affected zone are as narrow as possible. This way, the damage to the composite plate is as minimal as possible.

A very high power laser weld can offer a high depth welded area, but care should be taken that pore creation is eliminated. Without the use of a thermal insulator, a high power laser weld can also cause irreversible damage to a composite (a duroplastic composite for example) without the use of a thermal insulator. A thermoplastic composite can endure high temperatures without significant irreversible damage and for these cases a higher laser power weld may be appropriate, even without the use of an insulator.

Another parameter that may be controlled in the welding process is the welding path. When the metal rivet has a certain, precise diameter, the welding path is preferably adjusted, so that the centre of the welding keyhole meets exactly the interface of the metal rivet and the metal structure. When the welding path is shifted towards the centre of the rivet, the interface may not be completely welded and notches may be inserted to the weld. Notches could be points of crack initiation which reduce the fatigue life of a structure. When the welding path is shifted outwards from the centre of the rivet, notches may also be introduced to the structure.

Preferably a single mode fibre laser having a very good beam quality is used for welding, which can provide a good joint performance together with a very small damage of the plastic composite.

The afore-mentioned object is also achieved by an assembly of a plastic composite structure and a metal structure, wherein the plastic composite structure and the metal structure are connected by a cylindrical metal rivet, the metal rivet protruding through a hole in said plastic composite structure and said metal structure, and comprising a head section and a cylindrical shaft section, the head section being of a larger diameter than the shaft section, said connection being in such a way that the head section faces the free surface of said plastic composite structure and that at least part of the shaft section contacts the metal structure and wherein the metal rivet is joined to the metal structure by a laser welding joint. The assembly is preferably part of an aircraft, a nautical vessel or an automotive.

Alternatively, the afore-mentioned object is achieved by an assembly of a plastic composite structure which is disposed (sandwiched) between two metal structures, and the plastic composite structure and the metal structures are connected by a cylindrical metal pin, the metal pin protruding through a hole in said plastic composite structure and said metal structures comprising only a cylindrical shaft section of which is uniform in diameter, said connection being in such a way that at least part of the cylindrical shaft section of the metal pin contacts both metal structures, and the metal pin is joined to each of the metal structures a laser weld joint. The assembly is preferably part of an aircraft, a nautical vessel or an automotive.

The fatigue resistance is improved because the metal plate has no weak points suitable for crack initiation; the laser welding creates an integrated structure, where the metal rivet or metal pin that connects the composite part to the metal, is welded completely to the metal structure. The failure mechanism of the structure changes with the use of this invention shifting the failure from the metal structure to the metal rivets ort metal pins, which are then, easier and cost effective to replace in comparison to the whole metal structure.

### DETAILED DESCRIPTION OF THE INVENTION

The invention is further illustrated by the appended figures, wherein:
**Fig. 1** is a plan view of an assembly according to one embodiment of the invention;
**Fig. 2** is a cross-sectional view through an assembly according to another embodiment of the invention,
**Fig. 3** is a cross-sectional view through an assembly according to another embodiment of the invention;
**Fig. 4** is a plan view of an assembly according to another embodiment of the invention; and
**Fig. 5** is a plan view of an assembly according to a still another embodiment of the invention.
**Fig. 6** is a cross-sectional view through an assembly according to a still another embodiment of the invention.
**Fig. 7** is a cross-sectional photograph depicting a welding joint.
**Fig. 8** is a cross-sectional photograph depicting another welding joint.

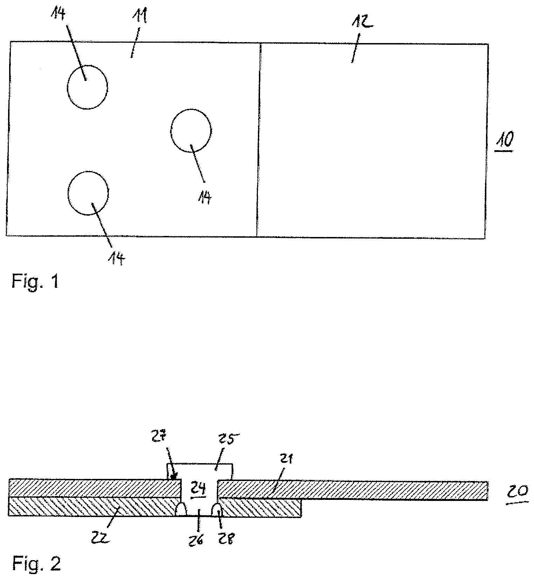

**Fig. 1** depicts an assembly **10** comprising a plastic composite sheet **11** and a metal sheet **12** that overlaps the bottom surface of the plastic composite sheet **11.** The plastic composite sheet **11** and the metal sheet **12** are joined in their overlapping region by cylindrical metal rivets **14.** The cylindrical metal rivets **14** have a top section which adheres to the top surface of the plastic composite sheet **11.** The rivets **14** may be positioned in rows of single or multiple rivets as viewed in the plan view.

**Fig. 2** depicts a similar assembly as shown in Fig.1 in a cross-sectional view. The assembly **20** depicted in Fig. 2 also comprises a plastic composite sheet **21** and a metal sheet **22** that overlaps the bottom surface of the plastic composite sheet **21.** The plastic composite sheet **21** and the metal sheet **22** are joined in their overlapping region by cylindrical metal rivets **24.** The cylindrical metal rivets **24** have a head portion **25** which is larger in diameter than the shaft portion **26** of the rivet **24.** In the depicted case, the rivet has an undercut in form of a ring portion **27** which separates its head portion **25** from its shaft portion **26,** and which secures the plastic composite sheet **21** to the metal sheet **22.** The cylindrical metal rivet **24** is attached to the metal sheet **22** by means of laser welded joints **28.**

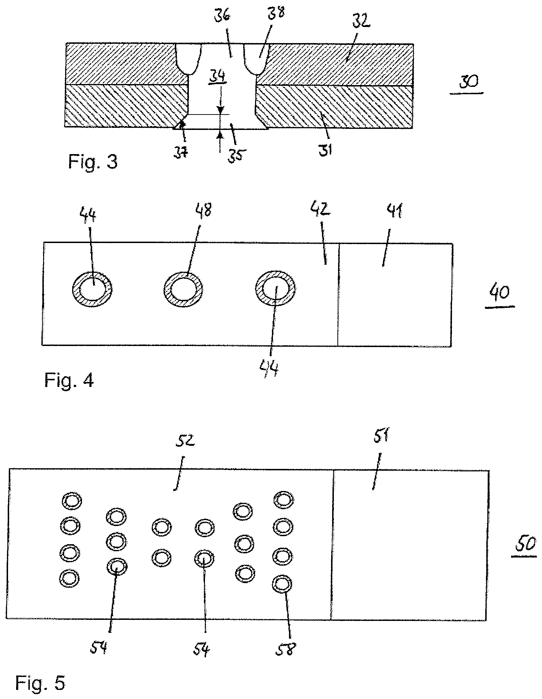

**Fig. 3** depicts an alternative embodiment of an assembly according to the invention. The assembly **30** depicted in Fig. 3 comprises a plastic composite sheet **31** and a metal sheet **32** that overlaps the top surface of the plastic composite sheet **31.** The plastic composite sheet **31** and the metal sheet **32** are joined in their overlapping region by cylindrical metal rivets **34.** The cylindrical metal rivets **34** have a head portion **35** which is larger in diameter than the shaft portion **36** of the rivet **34.** In the depicted case, the head portion **35** of the rivet **34** has a conical form. It tapers from the bottom end of the rivet **34** to a section, where the head section **35** connects to the shaft section **36** of the rivet **34,** thereby also forming a ring portion **37** which separates its head portion **35** from its shaft portion **36,** and which secures the plastic composite sheet **31** to the metal sheet **32.** The cylindrical metal rivet **34** is attached to the metal sheet **32** by means of laser welding **38.**

**Figs. 4** and **5** depict further alternative embodiments of assemblies (**40**, **50**) according to the invention. The assemblies (**40**, **50**) comprise a plastic composite sheet (**41, 51**) and a metal sheet (**42, 52**) that overlaps the top surface of the plastic composite sheet (**41, 51**). The plastic composite sheet (**41, 51**) and the metal sheet (**42, 52**) are joined in their overlapping region by cylindrical metal rivets (**44, 54**), the bottom section thereof being visible. The cylindrical metal rivets (**44**, **54**) are attached to the metal sheet (**42, 52**) by means of laser welding (**48, 58**). **Figs. 4** and **5** are distinguished by the arrangement of the metal rivets on the surface of the metal sheet (**42**, **52**). The rivets (**44, 54**) may be positioned in rows of single (**Fig. 4**) or multiple rivets (**Fig. 5**) as viewed in the plan view.

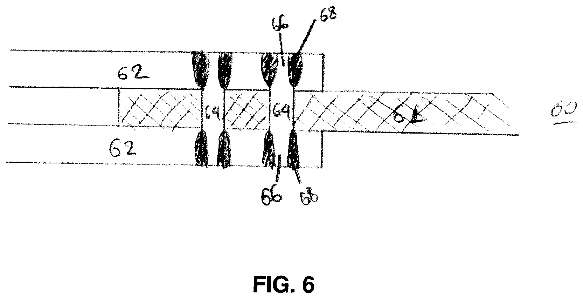

**Fig. 6** depicts a further alternative embodiment of an assembly (**60**) according to the invention. The assemblies (**60**) comprises a plastic composite sheet (**61**) and a two metal sheets (**62**) that overlap the top and bottom surface of the plastic composite sheet (**61**), respectively in a manner that the plastic composite sheet is disposed between the two metal sheets. The plastic composite sheet (**61**) and the metal sheets (**62**) are joined in their overlapping region by cylindrical metal rivets (**64**). The cylindrical metal rivets (**64**) are attached to each metal sheet (**62**) by means of laser welding, where (**68**) depicts the laser weld.

The above figures do not illustrate the insulator, which will be a further sheet or layer disposed between the plastic composite sheet (**11, 21, 31, 41, 51, 61**) and the metal sheet (**12, 22, 32, 42, 52, 62**) in the above figures.

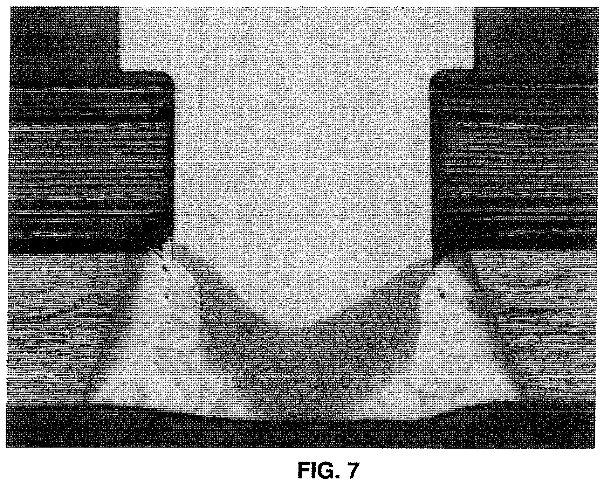

**Fig. 7** depicts a cross-sectional photograph of a laser-welded joint where a high laser power was used; there are some pores visible on the keyhole area of the weld. The right side of the pin also shows an example of an outwards shifted keyhole centre. It is also obvious that part of the composite that is used here is damaged by the heat.

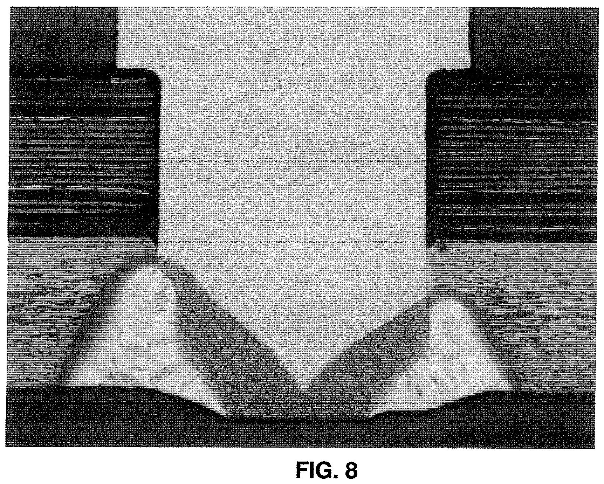

**Fig. 8** depicts another cross-sectional photograph of a laser-welded joint. On this picture, there is an example of a keyhole centre that is shifted outwards from the centre of the pin. On the right side of the pin, where the weld is not performed though the whole pin/metal plate interface, a notch is visible. On the left side of the pin, the keyhole is well centred, but the welding depth also does not cover the whole metal pin/metal plate interface.

## Claims

1. Method for the manufacture of a joint between a plastic composite structure (11, 21, 31, 41, 51) and a metal structure (12, 22, 32, 42, 52), wherein (i) at least part of the plastic composite structure (11, 21, 31, 41, 51) is overlapped with at least part of the metal structure (12, 22, 32, 42, 52), (ii) a cylindrical metal rivet (14, 24, 34, 44, 54) having a head section (25, 35) and a shaft section (26, 36), the head section (25, 35) being of a larger diameter than the shaft section (26, 36), is protruded through a hole in said plastic composite structure (11, 21, 31, 41, 51) and said metal structure (12, 22, 32, 42, 52) connecting said plastic composite structure and said metal structure in such a way that the head section (25, 35) of the cylindrical metal rivet (14, 24, 34, 44, 54) faces a free surface of said plastic composite structure (11, 21, 31, 41, 51) and that the at least part of the shaft section (26, 36) of the cylindrical metal rivet (14, 24, 34, 44, 54) contacts the metal structure (12, 22, 32, 42, 52), and thereafter, (iii) the part of said metal rivet (14, 24, 34, 44, 54) contacting said metal structure (12, 22, 32, 42, 52) is welded to said metal structure (12, 22, 32, 42, 52) on the interface of said metal rivet and said metal structure, **characterized in that** the head section (25, 35) is protruded through a hole in said plastic composite structure and said metal structure and **in that** the welding occurs by means of laser welding.

2. Method according to claim 1, wherein the head section (35) of the metal rivet (34) has a conical form that tapers from one end of the rivet to a section, where the head (35) section connects to the shaft section (36) of the rivet (34).

3. Method according to claim 1, wherein the head section (25) of the metal rivet (24) has an undercut.

4. Method according to any of claims 1 to 3, wherein the metal rivet (14, 24, 34, 44, 54) is hollow.

5. Method according to any of the previous claims, wherein the metal structure (12, 22, 32, 42, 52) and the plastic composite structure (11, 21, 31, 41, 51) and the metal rivet (14, 24, 34, 44, 54) are bonded together by an adhesive before the laser welding is performed.

6. Method according to any of claims 1 to 5, wherein a thermal insulator is disposed between the metal structure (12, 22, 32, 42, 52) and the plastic composite structure (11, 21, 31, 41, 51).

7. Method according to claim 6, wherein the thermal insulator is of a ceramic material, quartz, alumina or zirconia.

8. Method according to any of the preceding claims, wherein the material of the metal structure (12, 22, 32, 42, 52) is selected from the group consisting of titanium (Ti), aluminium (Al), magnesium (Mg) or an alloy of the afore-mentioned metals.

9. Method according to any of the preceding claims, wherein the material of the plastic composite structure (11, 21, 31, 41, 51) is selected from the group consisting of carbon fiber reinforced plastic (CFRP) or of a glass fiber reinforced plastic (GFRP).

10. Assembly of a plastic composite structure (11, 21, 31, 41, 51) and a metal structure (12, 22, 32, 42, 52), wherein the plastic composite structure and the metal structure are connected by a cylindrical metal rivet (14, 24, 34, 44, 54), the metal rivet (14, 24, 34, 44, 54) comprising a head section (25, 35) and a shaft section (26, 36), the head section (25, 35) being of a larger diameter than the shaft section (26, 36), **characterized in that** the metal rivet (14,24,34,44,54) protrudes through a hole in said plastic composite structure (11,21,31,41,51) and said metal structure (12,22,32,42,52), and **in that** said connection is such that the at least part of the shaft section (26, 36) of the rivet (14, 24, 34, 44, 54) contacts the metal structure (12, 22, 32, 42, 52) and wherein the metal rivet (14, 24, 34, 44, 54) and the metal structure (12, 22, 32, 42, 52) are joined by a laser welding joint in a way that the leaser welding has created an integrated structure, where the metal rivet is welded to the metal structure (12, 22, 32, 42, 52).

11. Assembly according to claim 10, wherein the metal rivet is massive.

12. Assembly according to any of claims 10 or 11, wherein the assembly is part of an aircraft, a nautical vessel or an automotive.

13. Assembly (60) of a plastic composite structure (61) which is disposed (sandwiched) between two metal structures (62), and **characterized in that** the plastic composite structure (61) and the metal structures (62) are connected by a cylindrical metal pin (64), the metal pin (64) protruding through a hole in said plastic composite structure (61) and said metal structures (62), and comprising only a cylindrical shaft section of which is uniform in diameter, said connection being in such a way that part of the cylindrical shaft section of the metal pin (64) contacts both metal structures (62), and the metal pin (64) is joined to each of the metal structures (62) a laser weld joint (68) in a way that the leaser welding has created an integrated structure, where the metal pin is welded to the metal structures (62).

14. Assembly according to claim 13, wherein the metal rivet is massive.

15. Assembly according any of claims 13 or 14, wherein the assembly is part of an aircraft, a nautical vessel or an automotive.

## Patentansprüche

1. Verfahren zur Herstellung einer Verbindung zwischen einer Verbundkunststoffstruktur (11, 21, 31, 41, 51) und einer Metallstruktur (12, 22, 32, 42, 52), bei dem (i) mindestens ein Teil der Verbundkunststoffstruktur (11, 21, 31, 41, 51) mit mindestens einem Teil der Metallstruktur (12, 22, 32, 42, 52) überlappt wird, (ii) eine zylindrische Metallniete (14, 24, 34, 44, 54) mit einem Kopfbereich (25, 35) und einem Schaftbereich (26, 36), wobei der Kopfbereich (25, 35) einen größeren Durchmesser aufweist als der Schaftbereich (26, 36), überstehend so durch ein Loch in der Verbundkunststoffstruktur (11, 21, 31, 41, 51) und der Metallstruktur (12, 22, 32, 42, 52), das die Verbundkunststoffstruktur und die Metallstruktur verbindet, gesteckt wird, dass der Kopfbereich (25, 35) der zylindrischen Metallniete (14, 24, 34, 44, 54) einer freien Oberfläche der Verbundkunststoffstruktur (11, 21, 31, 41, 51) entgegensteht und dass der mindestens eine Teil des Schaftbereichs (26, 36) der zylindrischen Metallniete (14, 24, 34, 44, 54) in Kontakt mit der Metallstruktur (12, 22, 32, 42, 52) steht und danach (iii) der Teil der Metallniete (14, 24, 34, 44, 54), der in Kontakt mit der Metallstruktur (12, 22, 32, 42, 52) steht, an der Kontaktstelle der Metallniete und der Metallstruktur an die Metallstruktur (12, 22, 32, 42, 52) geschweißt wird,
**dadurch gekennzeichnet, dass**
der Kopfbereich (25, 35) überstehend durch ein Loch in der Verbundkunststoffstruktur und der Metallstruktur gesteckt wird und dass das Schweißen mittels Laserschweißen erfolgt.

2. Verfahren nach Anspruch 1, wobei der Kopfbereich (35) der Metallniete (34) eine konische Form aufweist, die sich von einem Ende der Niete zu einem Bereich, wo der Kopfbereich (35) an den Schaftbereich (36) der Niete (34) angrenzt, verjüngt.

3. Verfahren nach Anspruch 1, wobei der Kopfbereich (25) der Metallniete (24) einen Unterschnitt aufweist.

4. Verfahren nach einem der Ansprüche 1 bis 3, wobei die Metallniete (14, 24, 34, 44, 54) hohl ist.

5. Verfahren nach einem der vorhergehenden Ansprüche, wobei die Metallstruktur (12, 22, 32, 42, 52) und die Verbundkunststoffstruktur (11, 21, 31, 41, 51) und die Metallniete (14, 24, 34, 44, 54) durch einen Klebstoff miteinander verbunden sind, bevor das Laserschweißen durchgeführt wird.

6. Verfahren nach einem der Ansprüche 1 bis 5, wobei ein thermischer Isolator zwischen der Metallstruktur (12, 22, 32, 42, 52) und der Verbundkunststoffstruktur (11, 21, 31, 41, 51) angeordnet wird.

7. Verfahren nach Anspruch 6, wobei der thermische Isolator aus einem keramischen Material, Quarz, Aluminiumdioxid oder Zirkoniumdioxid besteht.

8. Verfahren nach einem der vorhergehenden Ansprüche, wobei das Material der Metallstruktur (12, 22, 32, 42, 52) aus der Gruppe bestehend aus Titan (Ti), Aluminium (Al), Magnesium (Mg) oder einer Legierung aus den vorgenannten Materialien ausgewählt ist.

9. Verfahren nach einem der vorhergehenden Ansprüche, wobei das Material der Verbundkunststoffstruktur (11, 21, 31, 41, 51) aus der Gruppe bestehend aus kohlenstofffaserverstärktem Kunststoff (CFK) oder glasfaserverstärktem Kunststoff (GFK) ausgewählt ist.

10. Anordnung aus einer Verbundkunststoffstruktur (11, 21, 31, 41, 51) und einer Metallstruktur (12, 22, 32, 42, 52), wobei die Verbundkunststoffstruktur und die Metallstruktur durch eine zylindrische Metallniete (14, 24, 34, 44, 54) miteinander verbunden sind, wobei die Metallniete (14, 24, 34, 44, 54) einen Kopfbereich (25, 35) und einen Schaftbereich (26, 36) umfasst, wobei der Kopfbereich (25, 35) einen größeren Durchmesser aufweist als der Schaftbereich (26, 36),
**dadurch gekennzeichnet, dass**
die Metallniete (14, 24, 34, 44, 54) durch ein Loch in der der Verbundkunststoffstruktur (11, 21, 31, 41, 51) und der Metallstruktur (12, 22, 32, 42, 52) herausragt und
die Verbindung derart ausgebildet ist, dass der mindestens eine Teil des Schaftbereichs (26, 36) der Niete (14, 24, 34, 44, 54) in Kontakt mit der Metallstruktur (12, 22, 32, 42, 52) steht, wobei die Metallniete (14, 24, 34, 44, 54) und die Metallstruktur (12, 22, 32, 42, 52) durch eine Laserschweißnaht derart miteinander verbunden sind, dass das Laserschweißen eine ganzheitliche Struktur gebildet hat, wobei die Metallniete an die Metallstruktur (12, 22, 32, 42, 52) geschweißt ist.

11. Anordnung nach Anspruch 10, wobei die Metallniete massiv ist.

12. Anordnung nach einem der Ansprüche 10 oder 11, wobei die Anordnung Teil eines Flugzeugs, eines Schiffes oder eines Automobils ist.

13. Anordnung (60) aus einer Verbundkunststoffstruktur (61), die zwischen zwei Metallstrukturen (62) angeordnet (sandwiched) ist,
**dadurch gekennzeichnet, dass**
die Verbundkunststoffstruktur (61) und die Metallstrukturen (62) durch einen zylindrischen Metallstift (64) miteinander verbunden sind, wobei der Metallstift (64) durch ein Loch in der Verbundkunststoffstruktur (61) und den Metallstrukturen (62) herausragt und nur einen zylindrischen Schaftbereich umfasst, der einen einheitlichen Durchmesser aufweist, wobei die Verbindung derart ausgebildet ist, dass ein Teil des zylindrischen Schaftbereichs des Metallstifts (64) in Kontakt mit beiden Metallstrukturen (62) steht und der Metallstift (64) mittels einer Laserschweißnaht so mit jeder der Metallstrukturen (62) verbunden ist, dass das Laserschweißen eine ganzheitliche Struktur gebildet hat, wobei der Metallstift an die Metallstrukturen (62) geschweißt ist.

14. Anordnung nach Anspruch 13, wobei die Metallniete massiv ist.

15. Anordnung nach einem der Ansprüche 13 oder 14, wobei die Anordnung Teil eines Flugzeugs, eines Schiffes oder eines Automobils ist.

## Revendications

1. Procédé de fabrication d'une jonction entre une structure en plastique composite (11, 21, 31, 41, 51) et une structure en métal (12, 22, 32, 42, 52) dans lequel (i) au moins une partie de la structure en plastique composite (11, 21, 31, 41, 51) est recouverte par au moins une partie de la structure en métal (12, 22, 32, 42, 52), (ii) un rivet cylindrique en métal (14, 24, 34, 44, 54) ayant une section de tête (25, 35) et une section de tige (26, 36), la section de tête (25, 35) ayant un plus grand diamètre que la section de tige (26, 36), fait saillie à travers un trou dans ladite structure en plastique composite (11, 21, 31, 41, 51) et ladite structure en métal (12, 22, 32, 42, 52) reliant ladite structure en plastique composite et ladite structure en métal de telle manière que la section de tête (25, 35) du rivet cylindrique en métal (14, 24, 34, 44, 54) se trouve en face d'une surface libre de ladite structure en plastique composite (11, 21, 31, 41, 51) et que ladite au moins une partie de la section de tige (26, 36) du rivet cylindrique en métal (14, 24, 34, 44, 54) est en contact avec la structure en métal (12, 22, 32, 42, 52), et ensuite, (iii) la partie dudit rivet en métal (14, 24, 34, 44, 54) en contact avec ladite structure en métal (12, 22, 32, 42, 52) est soudée à ladite structure en métal (12, 22, 32, 42, 52) sur l'interface dudit rivet en métal et de ladite structure en métal, **caractérisé en ce que** la section de tête (25, 35) fait saillie à travers un trou formé dans ladite structure en plastique composite et ladite structure en métal et **en ce que** le soudage se fait par soudage au laser.

2. Procédé selon la revendication 1, dans lequel la section de tête (35) du rivet en métal (34) a une forme conique qui se rétrécit d'une extrémité du rivet à une section où la section de tête (35) se connecte à la section de tige (36) du rivet (34).

3. Procédé selon la revendication 1, dans lequel la section de tête (25) du rivet en métal (24) comporte une gorge.

4. Procédé selon l'une quelconque des revendications 1 à 3, dans lequel le rivet en métal (14, 24, 34, 44, 54) est creux.

5. Procédé selon l'une quelconque des revendications précédentes, dans lequel la structure en métal (12, 22, 32, 42, 52) et la structure en plastique composite (11, 21, 31, 41, 51) et le rivet en métal (14, 24, 34, 44, 54) sont collés ensemble au moyen d'un adhésif avant la réalisation du soudage au laser.

6. Procédé selon l'une quelconque des revendications 1 à 5, dans lequel on place un isolant thermique entre la structure en métal (12, 22, 32, 42, 52) et la structure en plastique composite (11, 21, 31, 41, 51).

7. Procédé selon la revendication 6, dans lequel l'isolant thermique est en céramique, quartz, alumine ou zircone.

8. Procédé selon l'une quelconque des revendications précédentes, dans lequel le matériau de la structure en métal (12, 22, 32, 42, 52) est choisi dans le groupe comprenant le titane (Ti), l'aluminium (Al), le magnésium (Mg) ou un alliage des métaux précités.

9. Procédé selon l'une quelconque des revendications précédentes, dans lequel le matériau de la structure en plastique composite (11, 21, 31, 41, 51) est choisi dans le groupe comprenant une matière plastique renforcée de fibres de carbone (CFRP) ou une matière plastique renforcée de fibre de verre (GFRP).

10. Ensemble d'une structure en plastique composite (11, 21, 31, 41, 51) et d'une structure en métal (12, 22, 32, 42, 52), dans lequel la structure en plastique composite et la structure en métal sont reliées par un rivet cylindrique en métal (14, 24, 34, 44, 54), le rivet en métal (14, 24, 34, 44, 54) comprenant une section de tête (25, 35) et une section de tige (26, 36), la section de tête (25, 35) ayant un plus grand diamètre que la section de tige (26, 36), **caractérisé en ce que** le rivet en métal (14, 24, 34, 44, 54) fait saillie à travers un trou formé dans ladite structure en plastique composite (11, 21, 31, 41, 51) et ladite structure en métal (12, 22, 32, 42, 52), et **en ce que** ladite connexion est telle que ladite au moins une partie de la section de tige (26, 36) du rivet (14, 24, 34, 44, 54) est en contact avec la structure en métal (12, 22, 32, 42, 52), et dans lequel le rivet en métal (14, 24, 34, 44, 54) et la structure en métal (12, 22, 32, 42, 52) sont liés par une jonction par soudage au laser de telle manière que le soudage au laser a créé une structure intégrée, où le rivet en métal est soudé à la structure en métal (12, 22, 32, 42, 52).

11. Ensemble selon la revendication 10, dans lequel le rivet en métal est massif.

12. Ensemble selon l'une quelconque des revendications 10 et 11, dans lequel l'ensemble fait partie d'un aéronef, d'un bâtiment marin ou d'une automobile.

13. Ensemble (60) d'une structure en plastique composite (61) qui est placée (prise) entre deux structures en métal (62), et **caractérisé en ce que** la structure en plastique composite (61) et les structures en métal (62) sont reliées par une goupille cylindrique en métal (64), la goupille en métal (64) faisant saillie à travers un trou formé dans ladite structure en plastique composite (61) et lesdites structures en métal (62), et ne comprenant qu'une section de tige cylindrique dont le diamètre est uniforme, ladite connexion étant telle qu'une partie de la section de tige cylindrique de la goupille en métal (64) est en contact avec les deux structures en métal (62), et la goupille en métal (64) est liée à chacune des structures en métal (62) par une jonction par soudage au laser (68) de telle manière que le soudage au laser a créé une structure intégrée, où la goupille en métal est soudée aux structures en métal (62).

14. Ensemble selon la revendication 13, dans lequel le rivet en métal est massif.

15. Ensemble selon l'une quelconque des revendications 13 et 14, dans lequel l'ensemble fait partie d'un aéronef, d'un bâtiment marin ou d'une automobile.
